Europäisches Patentamt

European Patent Office

Office européen des brevets

(11) Veröffentlichungsnummer: **0 154 599**
A1

## (12) EUROPÄISCHE PATENTANMELDUNG

(21) Anmeldenummer: 85710004.4

(22) Anmeldetag: 27.02.85

(51) Int. Cl.⁴: **B 07 B 13/00**
B 07 B 15/00, B 03 B 9/06

(30) Priorität: 01.03.84 DE 3407611
21.04.84 DE 3415090
01.03.84 EP 84102186

(43) Veröffentlichungstag der Anmeldung:
11.09.85 Patentblatt 85/37

(84) Benannte Vertragsstaaten:
IT

(71) Anmelder: Maschinenfabrik Bezner GmbH & Co. KG
Holbeinstrasse 30
D-7980 Ravensburg(DE)

(72) Erfinder: Stehle, Wolfgang, Dipl.-Ing.
Tödiweg 34
D-7981 Schlier(DE)

(72) Erfinder: Fuchs, Dieter, Ing. Grad.
Säntisweg 46
D-7981 Waldburg(DE)

(74) Vertreter: Patentanwälte Dipl.-Ing. E. Eisele Dr.-Ing. H. Otten
Goetheplatz 7
D-7980 Ravensburg(DE)

(54) Sortiereinrichtung insbesondere zur Aussortierung von Wertstoffen aus Hausmüll, Gewerbemüll, Sperrmüll, Trockenmüll, und/oder von Problem- und Gefahrenstoffen.

(57) Es wird eine Sortiereinrichtung vorgeschlagen, die zur Sortierung von Wertstoffen, insbesondere Trockenmüll wie Glas, Karton, Papier, Kunststoffe o. dgl. dient. Einem kreisringförmigen Sortiertisch (11,11a) mit Sortierarbeitsplätzen sind einzelne Sortiermaschinen zugeordnet, die unterschiedliche Sortieraufgaben erfüllen. Dies sind insbesondere eine Sortiereinrichtung (19) zur Trennung von räumlich körperlichen Sortiergut von flächenhaften Sortiergut, eine weitere Einrichtung (34) zur mechanischen Absortierung von Textilien, Bändern, Schnüren usw. sowie eine Sortiereinrichtung (50) zur Trennung von Mischpapier o. dgl., d. h. zur Trennung von flachen schwereren Papiersorten von räumlich leichteren Papiersorten.

Fig 3

0154599

Die Erfindung betrifft eine Sortiereinrichtung insbesondere zur Aussortierung von Wertstoffen aus Hausmüll, Gewerbemüll, Sperrmüll, Trockenmüll, und/ oder von Problem- und Gefahrenstoffen.

Derartige Einrichtungen bzw. Anlagen wurden beispielsweise schon in der DE-OS 34 15 090 vorgeschlagen.

Auf den Inhalt dieser veröffentlichten Anmeldung wird ausdrücklich Bezug genommen.

Der Erfindung liegt die Aufgabe zugrunde, eine komplette Sortieranlage mit Einzelsortiereinrichtungen für Stoffe der eingangs genannten Art zu schaffen, die flexibel einsetzbar sind, niedrige Herstellungs- und Betriebskosten aufweisen und unempfindlich im Betrieb sind. Weiterhin sollen die Nachteile des Standes der Technik vermieden werden. Aufgabe ist es weiterhin, bestimmte Bauelemente der Anlage derart zu gestalten, daß sie auch losgelöst von der übrigen Anlage zur Sortierung verwendbar sind.

Diese Aufgabe wird durch die Merkmale der selbständigen Ansprüche 1, 3, 6 und 13 gelöst.

Die Erfindung geht von der Kenntnis aus, daß die beim Stand der Technik auftretenden Nachteile nur durch ein äußerst flexibles System zur Sortierung der Wertstoffe behoben werden können. Dabei sollen geringste Investitionskosten und ein geringstmöglicher Personalbedarf angestrebt werden. Insbesondere hat die erfindungsgemäße Anlage den Vorteil, daß unterschiedlichste Mengen verarbeitet und unterschiedlichste Sortieraufgaben gelöst werden können. Durch den umlaufenden Sortiertisch gelangt Nichtsortiertes immer wieder an einen nächsten oder schließlich zum gleichen Sortierplatz um letzten Endes aussortiert zu werden. Die Restfraktion wird wahlweise zwischen den Sortierplätzen, am Anfang oder am Ende der Sortierstrecke ausgetragen.

Gemäß der Erfindung ist eine Sortiermaschine vorgesehen, die durch ein kombiniertes Bandsystem eine Trennung der flächenhaften von den körperlichen Teilen bewerkstelligt. Durch die Haftreibung des schrägen Bandes sowie durch einen Fangvorhang zur Zurückhaltung der leichten, flächenhaften Teile, durch den Trambolineffekt beim Auffallen und durch die Vibrationsbewegung der Vibrationseinrichtung sowie durch die Schwerkraft wird eine Absonderung der schweren körperförmigen Teilen von flächenförmigen Teilen erzielt. Die so getrennten Fraktionen werden den beiden konzentrisch verlaufenden Ringen des Sortiertisches zugeführt.

Vorteilhaft ist weiterhin ein Bürstenrad am Ende der Sortiermaschine, dessen weiche Borsten leichtere Teile wie Papier, Kunststoff o. dgl. tangential wegschleudern, während schwerere Teile wie Glasflaschen weitgehend unbeeinflußt bleiben.

Bei kleineren Sortieraufgaben kann diese Sortiermaschine auch unabhängig von der übrigen Anlage eingesetzt werden.

Eine erfindungsgemäße Alternativlösung sieht vor, daß eine zusätzliche Sortiermaschine zur mechanischen Absortierung von Textilien, Bändern, Schnüren, Strümpfen, Folienstreifen o. dgl. vorgesehen ist. Hierdurch kann ein nachteiliges Verstopfen von nachfolgenden Einrichtungen vermieden werden.

Als weitere Ergänzung der Sortieranlage ist eine Wertstoffsortiermaschine vorgesehen, die auf vorteilhafte Weise Mischpapier trennt, d. h. eine Trennung von schwererem flächenhaften Papiergut von leichterem räumlichen oder zerknülltem Papiergut o. dgl. durchführt.

Vorteilhafte und erfindungsgemäße Einrichtungen bzw. Maschinen der Sortieranlage sind in den Zeichnungen dargestellt und in der nachfolgenden Beschreibung näher erläutert. Es zeigen

Fig. 1    die Draufsicht einer bekannten Einrichtung mit entsprechenden Schnitten zur Darstellung der darunterliegenden Ebene,

Fig. 2    einen Schnitt entlang der Linie I-I in Fig. 1.

Fig. 3    eine Seitenansicht einer erfindungsgemäßen Sortiermaschine, zur Trennung körperförmigen von flächenförmigen Teilen,

Fig. 4     eine Draufsicht der Maschine nach Fig. 3,

Fig. 5, 6 eine weitere Sortiermaschine, zur Trennung von
           Textilien, Schnüren, Bändern o. dgl.,

Fig. 7, 8 eine weitere Sortiermaschine zur Trennung von Mischpapier.

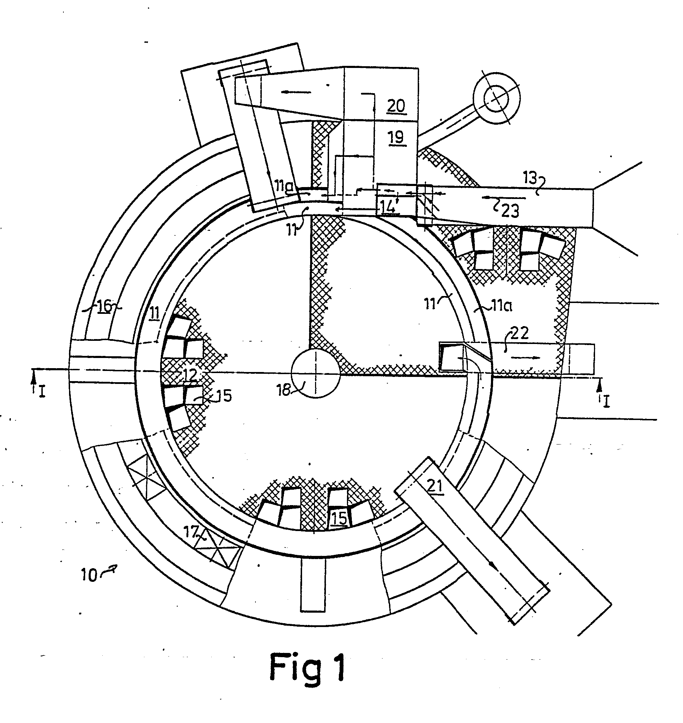

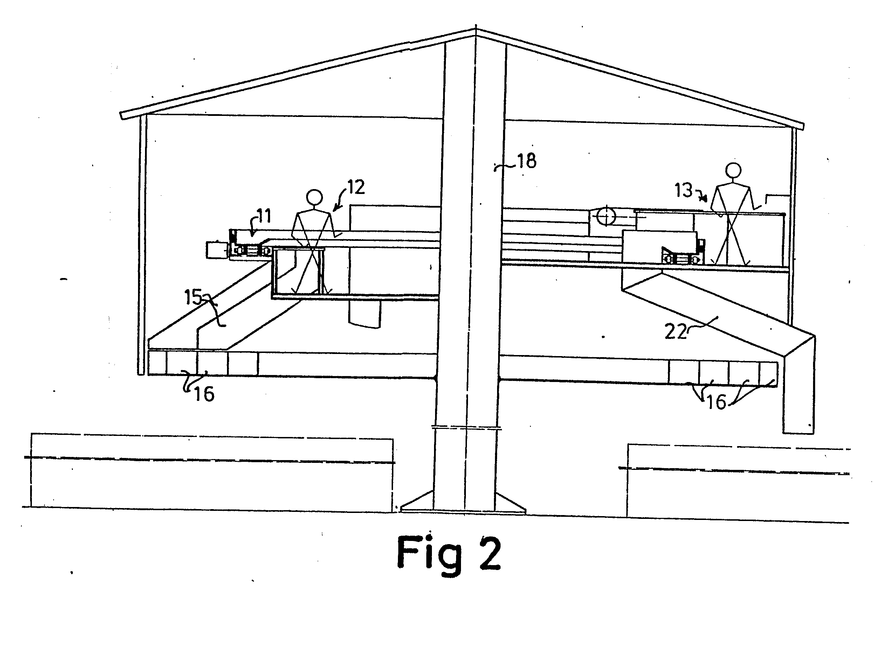

Die in den Figuren 1 und 2 dargestellte bekannte Sortieranlage 10
wird im erfindungsgemäßen System verwendet und besteht aus einem
kreisringförmigen ebenen horizontal umlaufenden Sortiertisch 11,
der in zwei konzentrisch gleichsinnig oder gegensinnig umlaufende
Kreisringe 11, 11a aufgeteilt ist, deren Umlaufgeschwindigkeiten
stufenlos regelbar sind. Dem Sortiertisch 11 sind mehrere gleiche
Sortierbühnen 12 innerhalb und außerhalb des Kreisrings zugeordnet, die als manuelle oder automatische Leseplätze ausgebildet
sein können. Die Sortierbühnen sind kreissegmentförmig ausgebildet und fest oder drehbar gelagert, so daß sie über einen
Fußschalter gesteuert, dem laufenden Sortiertisch nachfahren
können. Jede Sortierbühne kann mehrere Sortierer, z. B. vier,
aufnehmen, um den nötigen Arbeitsanfall zu bewerkstelligen. Dem
Sortiertisch 11 ist eine Vorsortierstrecke 13 vorgeschaltet, an
welcher Großkartonagen z. B. mit einem handgeführten Saugheber
erfaßt und direkt einem gesonderten Förderband bzw. einem Container zugeführt werden. Hierdurch braucht der Sortiertisch 11 nicht
auf die Größe derartiger Großgegenstände ausgebildet zu sein.

Jede Sortierbühne 12 nach Fig. 1 ist mit Sortierschächten 15
ausgestattet, die zu Entsorgungskanälen 16 führen, die unterhalb des Sortiertisches parallel bzw. auf konzentrischen Bahnen angeordnet sind. Die Entsorgungskanäle 16 haben an einer oder mehreren Stellen Durchlaßöffnungen 17, durch die das in den Entsorgungskanälen gesammelte Wertmaterial ausgeführt wird. Unter den Durchlaßöffnungen 17 können Container oder Förderbänder stehen, die die sortierten Wertstoffe von der Sortieranlage wegtransportieren. Die Sortierschächte können jedoch auch mit geradlinigen oder gekrümmten Entsorgungskanälen oder direkt mit Containern verbunden sein.

Die Funktion der Sortieranlage gemäß den Figuren 1 und 2 ist prinzipiell in der DE-OS 34 15 090 näher beschrieben werden. Hierauf wird ausdrücklich Bezug genommen.

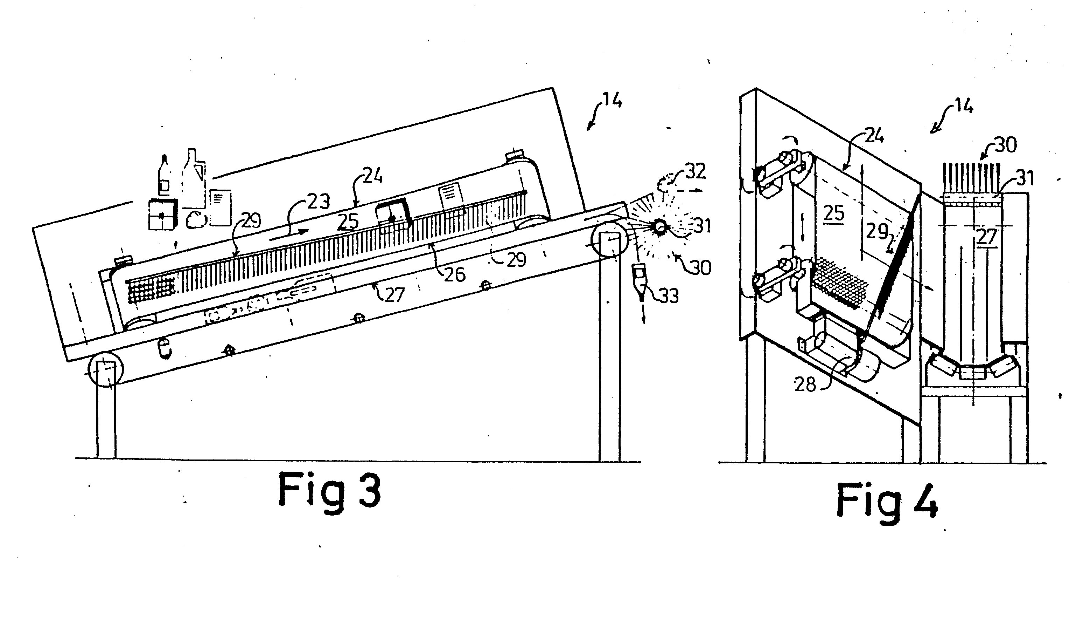

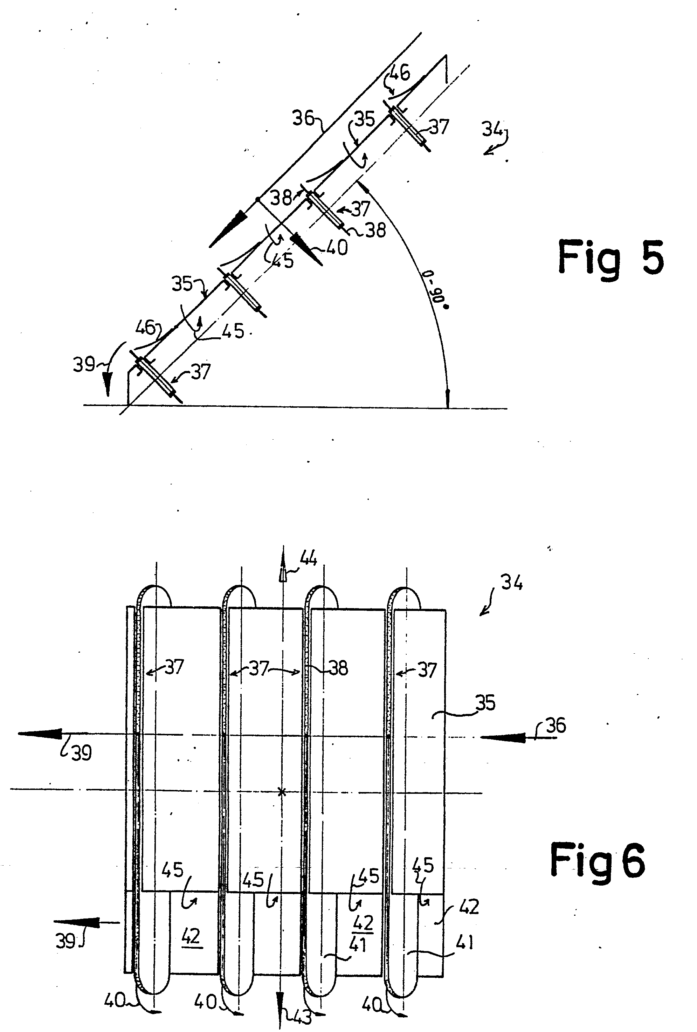

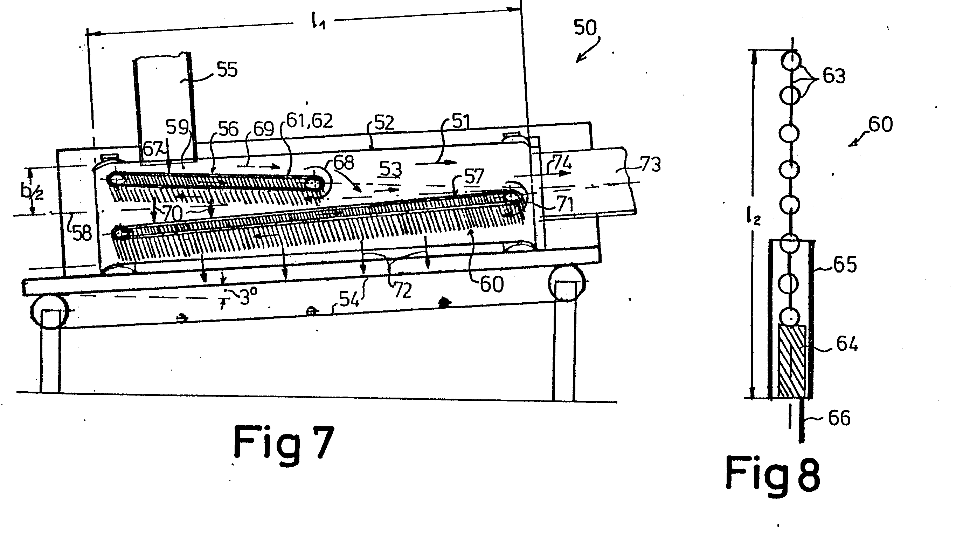

Erfindungsgemäß ist eine zusätzlich zwischen der Vorsortierstrecke 13 und dem Sortiertisch 11 vorgesehene Sortiermaschine 14 vorhanden zur Trennung körperförmigen von flächenförmigen Teilen, die als selbständige Baueinheit ausgebildet ist und nachstehend noch näher erläutert wird (s. Fig. 3 und 4). Von der Vorsortierstrecke 13 werden die ankommenden Wertstoffe auf die Sortiermaschine 14 oder den umlaufenden Sortiertisch 11 geführt. Dieser Sortiermaschine 14 sind erfindungsgemäß weitere Sortiereinrichtungen 34 (Fig. 5, 6) bzw. 50 (Fig. 7, 8) nachgeschaltet, die ebenfalls nachstehend noch näher erläutert sind.

Eine Erweiterung der Anlage ist demnach problemlos dadurch möglich, daß die Sortieranlage 10 durch eine Anzahl von "Sortiermaschinen" mit Sonderaufgaben ergänzt wird, wie nachfolgend noch beschrieben. Verbindet man diese Sortiermaschinen weiterhin mit einer Zwischenbunkerstrecke, so ergeben sich hieraus weitere Vorteile des Systems. Über den Zwischenbunker kann einerseits erreicht werden, daß die unterschiedlichen und stoßweise anfallenden Wertstoffsortimente gleichmäßig verteilt einer auf den statistischen Anfall der jeweiligen Sortimente ausgelegten Sortiermaschine oder Handlesestrecke zugeführt werden können. Andererseits besteht die Möglichkeit, spezielle Sortieraufgaben zu speichern. Diese Sortieraufgaben können dann nach Stillsetzung der Wertstoffzufuhr in einem gesonderten Arbeitsgang durchgeführt werden.

In den Figuren 3 und 4 ist ein Ausführungsbeispiel einer erfindungsgemäßen Sortiermaschine 14 dargestellt, die zweckmäßigerweise zwischen der Vorsortierstrecke 13 und dem Sortiertisch 11 angeordnet ist, aber auch allein vewendet werden kann. Das ankommende Wertstoffgemisch wird dabei in verschiedene Fraktionen, insbesondere in flächige leichte und körperförmige schwere Teile getrennt, da hierdurch die anschließenden Sortiervorgänge besser dimensionsabhängig gestaltet werden können. Die Sortiermaschine 14 besteht zunächst aus einem breitdimensionierten, in Transportrichtung 23 ansteigenden

0154599

Förderband 24 mit gegenüber einer Horizontalebene schrägen Transportebene 25. Mittels einer Vibrationseinrichtung 28 wird dieses schräge und ansteigende Transportband 24 in leichte Schwingbewegungen versetzt. Der Fördergurt 25 selbst hat einen hohen Reibwert, so daß hierdurch leichte bzw. flächige Teile (z. B Papier) daran haften und in Transportrichtung 23 auf dem Band 24 verbleibend gefördert werden. Körperförmige bzw. schwere Teile wie Flaschen usw. rollen oder rutschen dagegen auf der Schräge weg und werden in einem darunter liegenden ebenen oder gemuldeten, in Transportrichtung ansteigenden Förderband 27 gesammelt und weiter transportiert.

Schräg zur Längskante des Förderbandes 24 ist in seinem dem Transportband 27 zugewandten Bereich erfindungsgemäß ein Fangvorhang 29 in Form eines Kettenvorhangs vorgesehen, der ebenfalls die leichteren Teile zurückhält während schwere Teile hindurchgleiten können. Die gegenüber dem Transportband 24 schräge Anordnung des Kettenvorhangs 29 bewirkt, daß dieser nicht so leicht verstopft wird. Das Wertstoffgemisch wird am Bandanfang der Vorsortierstrecke 14 übergeben. Durch den Aufprall beim Herabfallen (Trambolineffekt) sowie durch die leicht schwingende Bewegung des Trennbandes 24 werden die Materialien entmischt. Durch die schwingende Bewegung des Förderbandes ergibt sich eine Rückfederwirkung auf die körperförmigen Teile, was die Trenn- wirkung begünstigt. Bei der Sortiermaschine wirken demnach die

Haftreibung und der Trambolineffekt des Trennbandes 24, die Vibration der Vibrationseinrichtung 28 und die Schwerkraft zusammen. Hierdurch ist eine gezielte Vorsortierung möglich.

Die Transportbänder 24, 27 können vorteilhafterweise auch aus einem einzigen, entsprechend geformten Band bestehen. Wahlweise kann das Transportband 27 muldenförmig ausgebildet sein.

Am Ende des unteren Transportbandes 27 (wahlweise auch am oberen Band 24) ist erfindungsgemäß eine weitere Trennvorrichtung für Teile in Form eines Bürstenrads 30 vorgesehen. Die in der Fig. 3 mit horizontaler Drehachse 31 dargestellte Rotationseinrichtung erfaßt mit seinen weichen Bürstenhaaren die leichten Teile 32 und schleudert sie tangential weg, während die schweren Teile 33 unbeeinflußt nach unten fallen. Das Büstenrad ist ähnlich einer Waschbürste in einer Kfz-Waschanlage aufgebaut.

Die Sortiermaschine 14 trennt das Wertstoffgemisch im wesentlichen in Papier und Flaschen o. dgl. auf. Diese Fraktionen werden dann den beiden Kreisringen des Sortiertisches zugeführt.

Die Sortiermaschine 14 kann auch für kleinere Sortieraufgaben selbständig verwendet werden. Dementsprechend ist der Schutz auch auf die selbständige Verwendung gerichtet.

Bei der in den Figuren 3 und 4 beschriebenen Sortiermaschine werden vorwiegend flächenhafte leichtere Teile auf dem Transportband 24 von körperförmigen Teilen auf dem Transportband 27 getrennt. Das Prinzip beruht darauf, daß durch die schräge Stellung der Transporteinrichtung 24 - hierunter ist nicht der Anstieg der Transporteinrichtung zu verstehen - das aufgebrachte Werstoffgemisch durch die Schwerkraft nach unten in Richtung Transporteinrichtung 27 rutscht. Teile die auf der Transportebene 25 haftenbleiben werden deshalb aus dem durch Schwerkraft beeinflußten Materialstrom seitlich herausgezogen.

Gemäß einer erfindungsgemäßen weiteren Sortiermaschine nach den Figuren 5 und 6 soll eine ggf. nach dem gleichen Prinzip wie nach Figur 3 und 4 arbeitende Sortiermaschine derart ausgestalltet sein, daß insbesondere eine mechanische Absortierung von Textilien, Bändern, Schnüren, Strümpfen, Folienstreifen o. dgl. aus dem unsortierten Werstoffgemisch ermöglicht wird. Dies ist deshalb von großer Bedeutung, da diese Werstoffe bei einer Nachsortierung beispielsweise über Siebmaschinen dort zu Verstopfungen führen würden. Außerdem benötigen diese Stoffe einen besonders hohen manuellen Sortieraufwand.

Hierzu arbeitet die in Figur 5 und 6 dargestellte Sortiermaschine 34 prinzipiell gleich wie die in den Figuren 3 und 4 dargestellte Sortiermaschine 14, d. h. das abzusortierende Gut wird seitlich oder in beliebigen, jeweils zu optimierenden Winkeln zum Hauptförderstrom über ein geeignetes Fördermittel aus dem vorzugsweise durch Schwerkraft fließenden Materialstrom ausgetragen. Dabei kann die Transportebene mit einer ggf. überlagerten Bewegung, d. h. flächigen Siebbewegung, Vibration o. dgl. beaufschlagt sein, dies ist jedoch nicht zwingend notwendig.

Wie in Figur 5 (Stirnansicht) und 6 (Draufsicht) dargestellt, wird das Wertstoffgemisch auf die schräge Transportebene 35 der Sortiereinrichtung 34 aufgebracht, deren Neigung zwischen einem Winkel 0° und 90° vorzugsweise 30° bis 60° gegenüber der Horizontalen liegen kann. Die Haupttransportrichtung infolge der Schwerkraft ist mit dem Pfeil 36 gekennzeichnet. Senkrecht oder in einem Winkel zu dieser Transportrichtung 36 weist diese spezielle Sortiereinrichtung 34 erfindungsgemäß zusäztliche Fördermittel 37 auf, die, wie in der Zeichnung dargestellt, beispielsweise als vier umlaufende Rollenketten mit in die schräge Transportebene 35 hineinragenden Stiften 38 ausgebildet sind. An Stelle einer Rollenkette kann jedoch auch ein umlaufendes Sägeblatt verwendet werden, dessen Zähne ebenfalls in die Transportebene hineinragen. Schließlich wäre auch ein umlaufendes Förderband mi hohem Reibwert oder ähnliches zusätzlich zwischen den Rollenketten oder alternativ verwendbar. Durch die in die Transportebene hineinragenden Stifte 38 bzw. Reibmittel werden Materialien wie Textilien, Bänder, Schnüre, Strümpfe usw. zuverlässig erfaßt und aus der Transportrichtung 36 als gesonderte Fraktion 40 ausgetragen. Die Fraktionen sind in der Figur 6 mit 39 und 40 bezeichnet, wobei die Fraktion 39 durch den durch Schwerkraft transportierten Wertstoffstrom, die Fraktion 40 durch den mittels dem
Fördermittel 27 ausgetragenen Wertstoffstrom (Bänder, Schnüre
usw.) gebildet werden.

Am Ende der schrägen Transportebene 35 ragt das Ende 41 des
Fördermittels 37 schwertförmig hinaus. Darunter ist eine weitere
Transporteinrichtung 42, zum Beispiel in Form einer schrägen
Rutsche angeordnet, in welche gröbere Teile hinunterfallen, die
zur Fraktion 39 gehören, die jedoch durch die mittels der Fördermittel 37 transportierten Wertstoffe mitgezogen wurden. Ein Zurückhalten dieser Stoffe kann ggf. durch einen Vorhang ähnlich
dem in Figur 3 erzielt werden. Die Wertstoffe die in die Transporteinrichtung 42 gelangen, können mit der Fraktion 39 zusammengeführt werden. Ähnlich der Funktion der Sortiermaschine 14 gemäß
den Figuren 3 und 4, kann jedoch über den Kanal 42 eine dritte
Fraktion 45 mit leichteren flächenhaften Stoffen ausgetragen
werden, während die Fraktion 39 die schwereren und/oder körperförmige Stoffe enthält. Es ist überdies möglich, die Maschinen
gemäß den Figuren 3 und 4 sowie Figuren 5 und 6 zu kombinieren.

Die durch die Fördermittel 37 seitlich ausgetragenen Wertstoffe
werden am Ende von dem Fördermittel dadurch abgestreift, indem die herausragenden Stifte 38 in ein Abstreifgitter o. dgl. hineingleiten, oder dadurch, daß die Stifte in einer Verkleidung
eintauchen.

Die Transportrichtung der Fördermittel 37 kann in beiden
Richtungen erfolgen. Dies ist durch die Pfeile 43, 44 angedeutet.
Sie kann insbesondere auch in beliebige Winkel gegenüber dem
Haupt- Wertstoffstrom 36 angeordnet sein.

Vor den jeweiligen Fördermitteln 37 können zusätzlich sprungschanzenartige Abweisevorrichtungen 46 angeordnet sein, die ein
leichteres Überspringen von flächenhaften oder körperförmigen
Teilen, d. h. Fraktion 39 ermöglichen, während Teile ohne innere
Festigkeit durch die Fördermittel 37 erfaßt werden (Fraktion 40).

In weiterer Ausgestaltung der Erfindung ist eine Wertstoffsortiermaschine gemäß den Figuren 7 und 8 vorgesehen. Bei der
Ausführungsform einer Sortiereinrichtung nach den Figuren 3 und 4
erfolgt eine Trennung von räumlich körperlichem, schweren Gut wie
Flaschen, Behälter usw. von leichtem flächenhaften Gut wie Papier
o. dgl. Gemäß der Vorrichtung nach Fig. 3 ist es jedoch schlecht
möglich, sog. Mischpapier zu verarbeiten, d. h. schwereres
flächenhaftes Papiergut wie z. B. Zeitschriften, Illustrierte,
Hefte, Kataloge usw. von leichtem, räumlich ausgedehnten Papiergut, wie z. B. zerknülltes Papier, Plastikfolien, Packpapiersäcke usw. zu trennen. Dies ist Aufgabe der Vorrichtung gemäß der Fig. 7.

Die Vorrichtungen gemäß den Figuren 3, 4 sowie Fig. 7 unterscheiden sich durch ihren verschiedenen Verwendungszweck prinzipiell dadurch, daß bei der Vorrichtung nach Fig. 7 keine überlagerte Vibration stattfindet und das aufgebrachte zu sortierende Gut auf einer glatten Oberfläche infolge der Schwerkraft herabrutscht. Prinzipiell ermöglichen die umlaufenden Kettenvorhänge eine Trennung der verschiedenen Fraktionen.

Die Anordnung von zwei in einem Winkel zueinander verlaufende Fangvorhänge hat den Vorteil, daß das auf die Fördereinrichtung gelangende Gut nicht sofort infolge der Schwerkraft auf der Transportebene mit niedrigem Reibwert herunterrutscht und infolge der Herabrutschgeschwindigkeit den Fangvorhang durchschlägt. Das zu sortierende Gut soll der Fördereinrichtung gedämpft zugeführt werden, wobei der obere Fangvorhang im Bereich der Aufgabestation des zu sortierenden Gutes beginnt.

Eine erfindungswesentliche Ausgestaltung der Erfindung sieht vor, daß die Fangvorhänge als umlaufende Vorhänge ausgebildet sind. Hierdurch wird die Bewegung des zu sortierenden Gutes durch das Transportband unterstützt und eine schnelle Verteilung des Gutes erreicht. Die erfindungsgemäße Sortiermaschine kann in Sonderfällen auch mit nur einem umlaufenden Fangvorhang betrieben werden. Das optimale Ergebnis wird durch Versuche mit unterschiedlichen Wertstoffen ermittelt.

Nachstehend ist die Wertstoffsortiermaschine 50 gemäß Fig. 7, 8 näher erläutert:

Die in der Fig. 7 dargestellte Wertstoffsortiermaschine 50 besteht aus einer in Transportrichtung 51 unter einer Steigung von ca. 3° ansteigenden Fördereinrichtung 52, welche als Transportband mit niedrigem Reibwert, z. B. Kunststoffoberfläche ausgebildet ist. Die Transportebene 53 der Fördereinrichtung 52 ist gegenüber der Horizontalen um ca. 40° geneigt bzw. schräg gestellt. Parallel zum Förderband 52 kann ein weiteres Förderband 54 vorgesehen sein, welches eine durch die Fördereinrichtung 52 getrennte Fraktion aufnehmen kann.

Die Fördereinrichtung 52 weist etwa eine Länge von $l_1 \approx 3$ m und $b \approx 2$ m auf. Die Drehzahl des Transportbandes beträgt ca. 50 U/Min. Die Umfangsgeschwindigkeit ca. 0,50 m/Sec.

Das Einwurfband 55 mündet im unteren Bereich des leicht schräg
gestellten Transportbandes 52 jedoch im oberen Bereich des
schräg gestellten Transportbandes. Die Abwurfhöhe des zu sortierenden Papiergemisches beträgt ca. 700 mm. Die Umfangsgeschwindigkeit des Einwurfbandes 55 beträgt ca. 0,80 m/Sec.

Erfindungsgemäß weist die Sortiermaschine zwei Kettenvorhänge
56, 57 auf. Der kürzere Kettenvorhang 56 weist etwa eine Länge
von 1,5 m auf. Mit der Längsachse 58 der Fördereinrichtung 52
schließt die Längsachse des kurzen Kettenvorhangs 56 einen
Winkel von ca. 14° ein. Der kurze Kettenvorhang 56 ist demnach
kurz vor der Aufgabestelle 59 des zu sortierenden Mischpapiers
angeordnet und läuft schräg zur Mittellinie 58 der Fördereinrichtung 52 hin.

Erfindungsgemäß ist ein zweiter längerer Kettenvorhang 57
unterhalb des ersten kürzeren Kettenvorhangs 56 angeordnet.
Dieser längere Kettenvorhang verläuft vom unteren seitlichen Rand der Fördereinrichtung 52 in Transportrichtung gesehen zur Mittellinie 58 des Förderbandes hin. Der lange Kettenvorhang erstreckt sich über die ganze Länge des Transportbandes
52 und beginnt am Anfang etwa am unteren seitlichen Ende und
endet etwa im Bereich der Mittellinie 58 des Transportbandes. Der
mit der Mittelachse 58 eingeschlossene Winkel beträgt ca. 8°.

Erfindungsgemäß sind die beiden Kettenvorhänge 56, 57 als umlaufende Kettenvorhänge ausgebildet. Hierfür sind die einzelnen, den Kettenvorhang bildenden Ketten 60 (s. Fig. 2) an einer umlaufenden Transportkette 61 in einer Kettenführungsschiene 62 befestigt. Die Umlaufgeschwindigkeit der Kettenvorhänge 56, 57 beträgt ca. 0,5 m/Sec.

In Fig. 8 ist eine Kette 60, aus welchem sich die Kettenvorhänge 56, 57 zusammensetzen, dargestellt. Die Kette 60 ist in der in Fig. 8 nicht näher dargestellten oberen Transportkette 61 eingehängt, die ihrerseits in der Kettenführungsschiene 62 läuft. Die Kette 60 wird aus Kettenglieder 63 gebildet, wobei am unteren Ende ein Rundstahl 64 (25 x 90 mm) als Gewicht vorgesehen ist. Das Gewicht der Kette 60 beträgt ca. 700 g. Die untere Hälfte der Kette 60 wird mit einem Kunststoffschlauch 65 überzogen. Ein Gummiband 66 dient als unterer Abschluß der Kette 60. Die Länge $l_2$ der Kette beträgt ca. 450 mm.

Die Kettenführungsschiene 62 mit den an der Transportkette 61 hängenden Einzelketten 60 ist derart oberhalb des Transportbandes 52 angeordnet, daß das untere Gummiband 66 (Maße 20 x 4 x 80) jeder einzelnen Kette 60 ca. 10 bis 20 mm auf dem Band 52 aufliegt.

Nachstehend wird die Funktionsweise der Sortiermaschine näher erläutert: Das zu sortierende Mischpapiergut besteht im wesentlichen aus schwerem flächenhaften Gut wie Zeitschriften, Illustrierte, Kataloge o. dgl. sowie leichtem räumlichen aufgebauschten Papier, wie zerknüllte Zeitungen, zerknülltes Packpapier o. dgl. Dieses Mischpapier wird über das Einwurfband 55 der Fördereinrichtung 52 zugegeben (Pfeil 67), wobei das Gut aus einer Höhe von ca. 700 mm auf die Transportebene 53 herabfällt. Durch dieses Herabfallen erfolgt schon eine gewisse Trennung der unterschiedlichen Papiersorten.

Das leicht ansteigende Transportband 52 mit glatter Kunststoffoberfläche und mit niedrigem Reibwert bewegt sich in Richtung Pfeil 51. Durch die schräge Anordnung der Transportebene 53 gegenüber der Horizontalen um einen Winkel von ca. 40° rutscht das aufgegebene Mischpapier auf der glatten Transportebene 53 gegen den kürzeren Kettenvorhang 56, der sich ebenfalls in Transportrichtung (Pfeil 68) dreht. Dabei wird leichteres und räumlich ausgedehntes Papiergut entlang dem kürzeren Kettenvorhang 56 transportiert (Pfeil 69), während schwereres, flächenhaftes Papiergut wie Zeitschriften und Kataloge durch bzw. unter den kurzen Kettenvorhang 56 hindurchgleiten und entlang der Schräge der Transportebene 53 infolge der Schwerkraft (Pfeil 70) und zu dem unteren, längeren Kettenvorhang 57 gelangen. Der längere Kettenvorhang 57 arbeitet prinzipiell gleich wie der kürzere Kettenvorhang 56. Dieser bewegt sich ebenfalls in

0154599

Transportrichtung 51 entsprechend dem Pfeil 71. Schwereres Gut wie Zeitschriften, Kataloge rutschen durch den längeren Kettenvorhang hindurch (Pfeil 72) und gelangen zum parallel laufenden Transportband 54 zur Weiterverwertung. Das leichtere, räumliche Papiergut bleibt oberhalb der Kettenvorhänge 56, 57 und wird am Ende der Sortiermaschine über ein Transportband 73 weiter transportiert (Pfeil 74). Das schwerere flächenhafte Papiergut kann unterhalb der Kettenvorhänge 56, 57 hindurchgleiten, da die untere Begrenzung lediglich durch das flexible Gummiband 66 bewerkstelligt wird. Im übrigen hält der schwere Kettenvorhang das leichtere, räumliche Papiergut oder auch Kunststoffmaterial zurück. Hierdurch wird eine perfekte Trennung von Mischpapiersorten erzielt.

PATENTANWÄLTE

DIPL.-ING. EBERHARD EISELE    DR.-ING. HERBERT OTTEN

Zugelassene Vertreter beim Europäischen Patentamt

Goetheplatz 7    7980 Ravensburg  Telefon (0751) 3003u.3004    Teletex 751102 inventi

0154599

Anmelderin:              Maschinenfabrik Bezner
                         GmbH & Co. KG
                         Holbeinstraße 30
                         7980 Ravensburg


amtl. Bezeichnung:       Sortiereinrichtung insbesondere
                         zur Aussortierung von Wertstoffen
                         aus Hausmüll, Gewerbemüll, Sperrmüll, Trockenmüll, und/oder von
                         Problem- und Gefahrenstoffe



A N S P R Ü C H E



1.    Sortiereinrichtung zur Aussortierung von Wertstoffen aus Hausmüll, Gewerbemüll, Sperrmüll, Trockenmüll und/oder von Problem- und Gefahrenstoffen, dadurch gekennzeichnet, daß eine Sortiermaschine (14) zur Trennung körperförmigen von flächenförmigen Teilen vorgesehen ist, welche eine breite, vorzugsweise in Transportrichtung (23) ansteigende Fördereinrichtung (24) aufweist, mit einer schrägen, einen hohen Reibwert aufweisenden, in Schwingbewegungen versetzbaren (28) Transportebene (25) zur Aufnahme flächenförmiger Teile und daß an der unteren Längskante (26) der schrägen Fördereinrichtung (24) ein ebenes oder gemuldetes, vorzugsweise in Transportrichtung (23) ansteigendes Förderband (27) vorgesehen ist, zur Aufnahme von körperförmigen Teilen, wobei den Transportebenen (25, 27) unterschiedliche Kreisringe (11, 11a) zugeordnet sind und daß die Transportebene (25) im Übergangsbereich zur Transportebene (27) einen vorzugsweise zur Transportrichtung winklig angeordneten Fangvorhang (29) zur Rückhaltung von leichten Teilen aufweist.

2.    Einrichtung nach Anspruch 1, dadurch gekennzeichnet, daß ein schräges Förderband (24) mit dem daran anschließenden, vorzugsweise als Mulde ausgebildeten Förderband (27) eine durchgehende Transporteinheit bildet.

3.    Einrichtung, insbesondere nach Anspruch 1 oder 2, dadurch gekennzeichnet, daß am Ende des Förderbandes (27) ein Bürstenrad (30) mit horizontaler oder vertikaler Drehachse (31) mit langen, flexiblen Bürstenhaaren vorgesehen ist.

4.    Sortiereinrichtung insbesondere nach Anspruch 1 mit einem in einer oberen Ebene angeordneten Transportmittel, welches das zu sortierende Gut wenigstens zwei Sortierarbeitsplätzen zuführt, wobei den Sortierarbeitsplätzen nach unten, zu den jeweiligen Aufnahmen für die einzelnen auszusortierenden Stoffe führende Sortierschächte zugeordnet sind, dadurch gekennzeichnet, daß als Transportmittel (11) wenigstens ein oder zwei gleichsinnig oder gegenläufig horizontal umlaufende ebene Kreisringe (11, 11a) mit regelbarer Transportgeschwindigkeit vorgesehen sind, und daß die, den Sortierarbeitsplätzen (12) zugeordneten Sortierschächte (15) wahlweise mit zugeordneten, konzentrisch verlaufenden, kreisringförmigen und/oder unterhalb des Kreisrings (11) geradlinig oder gekrümmt verlaufenden entleerbaren Entsorgungskanälen (16) oder Transportbändern verbunden sind, oder daß die Sortierschächte (15) direkt mit Containern verbunden sind.

5.    Einrichtung nach Anspruch 4, dadurch gekennzeichnet, daß
die Sortierbühnen (12) als Kreissegmente innerhalb und/oder
außerhalb des kreisringförmigen Sortiertisches (11) angeordnet
und fest oder drehbar gelagert sind, wobei jeder Sortierbühne
(12) gleiche oder verschiedene Sortierschächte (15) zugeordnet
sind.

6.    Einrichtung insbesondere nach einem oder mehreren der
vorhergehenden Ansprüche, dadurch gekennzeichnet, daß eine ebene
oder schräge Transporteinrichtung (34, 35) vorgesehen ist, auf
welche das Wertstoffgemisch vorzugsweise durch Schwerkraft
transportierbar ist, und daß die Transporteinrichtung wenigstens
mit einem zusätzlichen Fördermittel (37) versehen ist, mittels
welchem an das Fördermittel (37) anhaftende Wertstoffe wie
Textilien, Bänder, Schnüre, Strümpfe o. dgl. vom übrigen,
vorzugsweise durch Schwerkraft fließenden Wertstoffstrom
austragbar sind.

7.    Einrichtung nach Anspruch 6, dadurch gekennzeichnet, daß
die Neigung der schrägen Transporteinrichtung (35) zwischen 0°
und 90° variierbar ist und vorzugsweise 30° bis 60° beträgt.

8.    Einrichtung nach Anspruch 6 oder 7, dadurch gekennzeichnet, daß die Fördermittel (37) als umlaufende Rollenkette
mit in die Transportebene (35) hineinragenden Stiften (38) oder als umlaufendes Sägeblatt und/oder als Förderband mit hohem Reibwert o. dgl. ausgebildet ist.

9.    Einrichtung nach Anspruch 8, dadurch gekennzeichnet, daß - bezüglich des Wertstoffstroms - vor den Fördermitteln (37) Abweisevorrichtungen (46) zur Erzeugung eines sprungschanzenartigen Effekts vorgesehen sind.

10.    Einrichtung nach einem der vorhergehenden Ansprüche 6 bis 9, dadurch gekennzeichnet, daß die Transportrichtung (43, 44) der Fördermittel (37) beliebige Winkel, vorzugsweise 90°, gegenüber der Transportrichtung (36) des durch Schwerkraft fließenden Wertstoffstroms einnehmen kann.

11.    Einrichtung nach einem oder mehreren der vorhergehenden Ansprüche 6 bis 10, dadurch gekennzeichnet, daß das Ende (41) der umlaufenden Rollenkette (37) o. dgl. frei überhängend aus der Transportebene (35) hinausragt und daß unterhalb dieses Bereichs Aufnahmeeinrichtungen oder weitere Transporteinrichtungen (42) für die nicht mit dem Fördermittel (37) auszutragende Fraktion vorgesehen sind.

12.    Einrichtung nach einem oder mehreren der vorhergehenden Ansprüche 6 bis 11, dadurch gekennzeichnet, daß am Ende der Transportebene in Transportrichtung (43, 44) des Fördermittels (37) ein Rückhaltevorhang vorgesehen ist.

13. Wertstoffsortiermaschine, insbesondere zur Trennung von schwerem flächenhaften Papiergut o. dgl. von leichtem räumlichen Papiergut o. dgl. (Mischpapier) bei der Aussortierung von Wertstoffen aus Hausmüll, Gewerbemüll, Sperrmüll, Trockenmüll und/oder von Problem- und Gefahrenstoffen, mit einer breiten, vorzugsweise in Transportrichtung (51) leicht ansteigenden Fördereinrichtung (52) dessen Transportebene (53) zur Förderung mittels Schwerkraft gegenüber der Horizontalebene schräg geneigt ausgebildet ist, und die wenigstens ein gegenüber der Längsachse (58) der Fördereinrichtung (52) in einem spitzen Winkel angeordneter Fangvorhang (56, 57) zur Zurückhaltung von Sortiergut aufweist, insbesondere nach einem oder mehreren der vorhergehenden Ansprüche 1 bis 12, dadurch gekennzeichnet, daß die Transportebene vorzugsweise einen niedrigen Reibwert aufweist und daß im Bereich der Wertstoffaufgabestelle (59) ein erster Fangvorhang (56) zur Zurückhaltung von leichtem, räumlichen Papiergut o. dgl. und darunter ggf. ein zweiter Fangvorhang (57) mit gleicher Aufgabe vorgesehen ist, wobei sich der erste Fangvorhang (56) etwa über die halbe Länge, der zweite Fangvorhang (57) über die ganze Länge der Transporteinrichtung (52) erstreckt und wobei insbesondere ein oder beide Fangvorhänge (56, 57) als umlaufende Kettenvorhänge ausgebildet sind.

14. Sortiermaschine nach Anspruch 13, dadurch gekennzeichnet, daß die Fangvorhänge (56, 57) mit der Längsmittelachse (58) der Transportebene einen spitzen Winkel einschließen, der beim kurzen Fangvorhang ca. 14°, beim langen Fangvorhang ca. 8° beträgt, wobei die Fangvorhänge (56, 57) in Transportrichtung (51) zusammenlaufen.

15 Sortiermaschine nach Anspruch 13 oder 14, dadurch gekennzeichnet, daß der Kettenvorhang (56, 57) aus einer Kettenführungsschiene (62) mit einer darin umlaufenden Transportkette (61) besteht, daß an der Transportkette herabhängende, den Vorhang bildende Einzelketten (60) vorgesehen sind, die im unteren Bereich ein Gewicht (64) zur Versteifung des Vorhangs sowie eine Gummilippe (66) aufweisen.

0154599

1/5

Fig 1

Fig 2

Fig 3

Fig 4

Fig 5

Fig 6

Fig 7

Fig 8

0154599

Europäisches
Patentamt

**EUROPÄISCHER RECHERCHENBERICHT**

EP 85 71 0004

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| P,X | EP-A-0 123 825 (BEZNER GmbH) * Ansprüche; Abbildungen * | 1-5 | B 07 B 13/00 B 07 B 15/00 B 03 B 9/06 |
| X | GB-A- 566 183 (L.G. HAMLIN) * Seite 3, Zeile 33 - Seite 4, Zeile 15; Anspruch 1; Abbildung * | 4 | |
| A | | 5 | |
| X | AGRICULTURAL ENGINEERING RECORD, Band 2, Herbst 1947 - Sommer 1949, Seiten 33-42, The National Institute of Agricultural Engineering, GB; * Seite 40, Abbildung 13 * | 6,8,10 ,11 | |
| A | Idem  * Seite 40, Abbildung 12 * | 1,2,13 ,15 | RECHERCHIERTE SACHGEBIETE (Int. Cl 4) |
| A | DE-C- 182 993 (W. WERNER) * Seite 1, Zeile 66 - Seite 2, Zeile 33; Anspruch; Abbildung 1B * | 4 | B 03 B B 07 B B 07 C |
| A | FR-A-2 481 617 (MO OCH DOMSJO AKTIEBOLAG) * Seite 3, Zeilen 28-39; Abbildung 1 * | 8 | |
| | --- -/- | | |

Der vorliegende Recherchenbericht wurde für alle Patentansprüche erstellt.

| Recherchenort DEN HAAG | Abschlußdatum der Recherche 17-05-1985 | Prüfer BANNWARTH C.L. |
|---|---|---|

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | SOVIET INVENTIONS ILLUSTRATED, Derwent Publications Ltd., Woche D05, 11. März 1981; & SU - A - 737 027 (ASSIBE MINING INST.) 30.05.1980 | 4,5 | |
| | --- | | |
| A | CA-A-1 110 996 (RESOURCE RECOVERY LTD.) * Seite 4, Zeile 22 - Seite 5, Zeile 30; Ansprüche 1,12,13; Abbildung 1 * | 4 | |
| | --- | | |
| A | GB-A-2 070 978 (F. GRIMME) * Abbildung 1 * | 1 | |
| | --- | | |
| A | DE-C- 804 191 (W.A.G. WESTRATE) | | RECHERCHIERTE SACHGEBIETE (Int. Cl.4) |
| | --- | | |
| A | GB-A- 824 414 (SIEMENS & HALSKE) | | |
| | --- | | |
| A | DE-A-2 253 353 (KNAPSACK AG) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 17-05-1985 | BANNWARTH C.L. |